Europäisches Patentamt

(19) European Patent Office

Office européen des brevets

(11) Publication number: **0 148 278**
**B1**

(12) **EUROPEAN PATENT SPECIFICATION**

(45) Date of publication of patent specification: **22.11.90**

(21) Application number: **84902723.0**

(22) Date of filing: **05.07.84**

(86) International application number:
**PCT/JP84/00344**

(87) International publication number:
**WO 85/00457 31.01.85 Gazette 85/03**

(51) Int. Cl.⁵: **G 11 B 7/12**

(54) **LIGHT PICKUP.**

(30) Priority: **06.07.83 JP 122804/83**
**06.07.83 JP 122806/83**

(43) Date of publication of application:
**17.07.85 Bulletin 85/29**

(45) Publication of the grant of the patent:
**22.11.90 Bulletin 90/47**

(84) Designated Contracting States:
**DE FR GB**

(56) References cited:
| | |
|---|---|
| EP-A-0 039 836 | JP-A-5 133 603 |
| FR-A-2 394 106 | JP-A-5 771 529 |
| FR-A-2 403 575 | JP-U-5 787 345 |

**PATENTS ABSTRACTS OF JAPAN, vol. 6, no. 38
(P-105)916r, 9th March 1982; & JP-A-56 156 937
Eugene Hecht/Alfred Zajac, "OPTICS", Fourth
Printing 1979, Addison-Wesley Publishing
Company, Inc. Philippines, Library of Congress
Catalog Card No. 79-184159, p. 558**

(73) Proprietor: **MATSUSHITA ELECTRIC
INDUSTRIAL CO., LTD.**
**1006, Oaza Kadoma**
**Kadoma-shi, Osaka-fu, 571 (JP)**

(72) Inventor: **ITO, Masashi**
**9-2, Syowaen Settsu-shi**
**Osaka-fu 566 (JP)**
Inventor: **MATSUNO, Toshiki**
**8-20, Minamiguchi 1-chome**
**Takarazuka-shi Hyogo-Ken 665 (JP)**
Inventor: **NAKAMURA, Hiroyuki**
**6-30, Okamoto 9-chome Higashinada-ku**
**Kobe-shi Hyogo-ken 658 (JP)**
Inventor: **YASUDA, Hiroshi**
**4-202, Myoukenzaka 3-chome**
**Katano-shi Osaka-fu 576 (JP)**

(74) Representative: **Senior, Alan Murray
J.A. KEMP & CO 14 South Square Gray's Inn
London WC1R 5EU (GB)**

Courier Press, Leamington Spa, England.

## Description

The present invention relates to an optical pickup device for use in a reproducing apparatus of the type which optically picks up digital signals recorded at high density in a disc-like recording medium (which will hereinafter be referred to as disc) by illuminating tracks with a light beam.

Optical pickup devices are used for optical digital audio disc players or optical video disc players to reproduce information recorded on a disc. In the optical pickup of the digital audio disc player, a semiconductor laser is used as a light source with a view to keeping the size and weight of the optical pickup to a minimum.

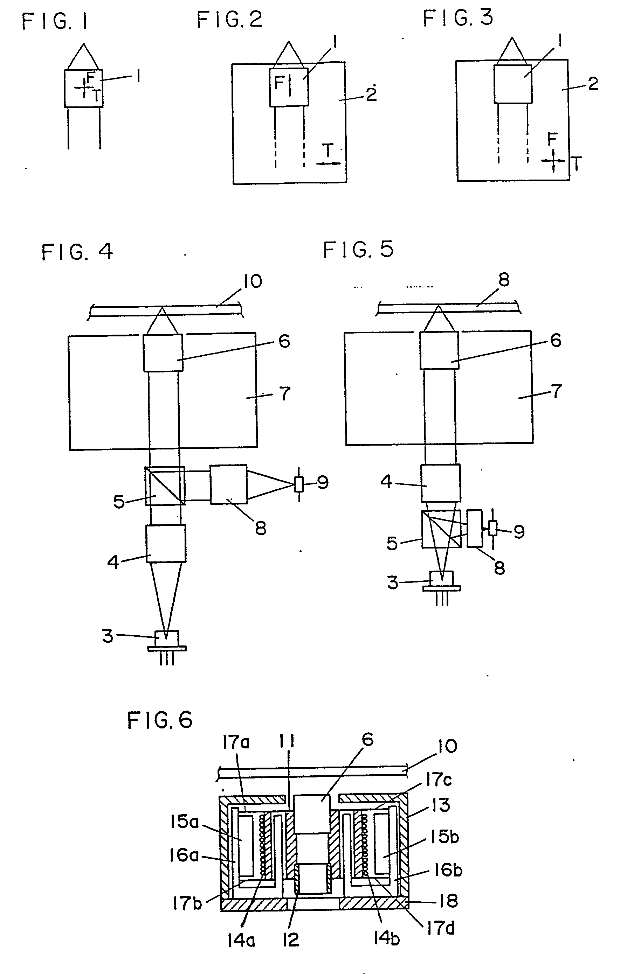

Track following control methods are currently employed to eliminate the problem of errors due to warped discs, surface irregularities of discs and eccentric tracks. In a first method, the object lens system 1 of optical pickup is moved in the directions of focus indicated by arrow F in Fig. 1 and in directions transverse to tracks as indicated by arrow T. In a second method the objective lens system 1 is moved in the directions F and the whole unit of pickup 2 including the laser, light sensor and the lens, is moved in the directions T as shown in Fig. 2. In a third method, the whole unit 2 is moved both in the directions F and T.

Of these, the first and second methods have been employed extensively. In the conventional methods, including the third method, it is required that beams incident to the objective lens 1 be parallel, because this enables the objective lens 1 to be controlled in all directions without decreasing its optical performance and commerically available objective lens are designed to fit for parallel ray arrangements.

The following is a description of conventional optical pickups.

Fig. 4 is a side view showing a conventional optical pickup. Designated at 3 in the drawing is a semiconductor laser, numerical 4 depicting a collimating lens, numerical 5 illustrating a semitransparent mirror, numerical 6 designating an objective lens, numerical 7 depicting an objective-lens drive unit, numerical 8 designating an error detecting optical system for detecting focus error and tracking error, numerical 9 designating a light-receiving element, and numerical 10 depicting a disc.

The operation of this optical pickup is as follows.

Light emitted from the semiconductor laser 3 is collimated by the collimating lens 4 before reaching the objective 6 through the semitransparent mirror 5 and then focussed on the disc 10. light reflected on the disc is collimated by lens 6 and is divided by the semitransparent mirror 5 into two beams, one of which is brought to a focus on the light-receiving element 9 by the error detecting optical system 8.

The objective lens 6 is arranged so as to be controlled by the objective drive unit 7 in focussing and tracking directions so that the track following control can be performed to minimize errors due to warped discs, eccentric tracks or the like.

The collimating lens 4, shown in Fig. 5, is positioned between semitransparent mirror 5 and objective 6, resulting in a compact structure as compared with that shown in Fig. 4.

Since the distance between semiconductor 3 and collimating lens 4 and distance between objective 6 and disc 10 are respectively determined by such factors as the focal length of the respective lenses and, working distances to reduce the size of the optical system, it is necessary that the distance between collimating lens 4 and objective lens 6 be as short as possible.

One possible solution is to lower the height of the objective drive unit 7. However, because of the design limitations imposed on the maximum working distance of objective 6 as seen in Fig. 6, placing a limit on the allowable distance between it and disc 10, and because of the necessity to ensure that the distance between disc 10 and a cover 13 and the distance between cover 13 and a lens holder 11 be greater than the movable ranges of disc 10 and lens 6, there results in a structure in which the lens 6 extends upward from lens holder 11. This requires a balance weight 12 to be attached to the lower part of the lens holder to counter the weight of the lens 6 to ensure stability of the moving part of the unit, making it difficult to reduce the overall height of the unit. Further design considerations given to the stability and driving power of the unit necessarily result in a bulky structure as high as 15 mm to 20 mm.

Illustrated at 14a and 14b in Fig. 6 are coils, 15a and 15b designating magnets, 16a and 16b depicting yokes. These parts are used for constructing a magnetic circuit for driving the objective 6. In the same drawings, 17a, 17b, 17c and 17d designate members for supporting the moving part of the unit and 18 depicts a base of the objective drive unit.

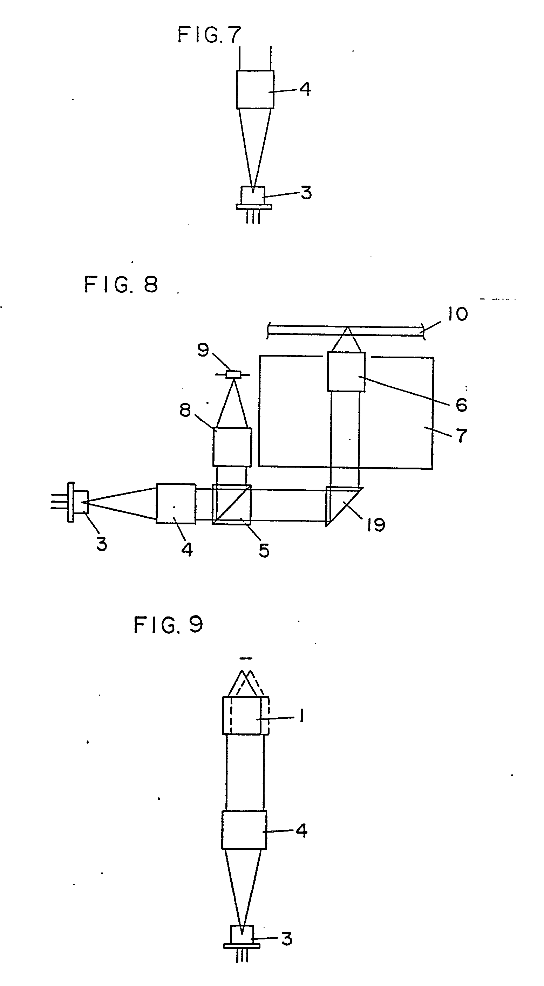

In conventional optical pickups described above, a costly collimating lens system is additionally required for collimating the diverging rays of light emitted from semiconductor laser 3 in a manner as shown in Fig. 7. This represents disadvantages in that there are an increase in the total cost of the drive unit and an increase in the number of parts to comprise the unit resulting in a larger aberration of the whole system.

Furthermore, the collimating lens system 4 has a relatively long focal length, generally in the range from 14 mm to 17 mm. If this focal length is taken into account, the distance between laser 3 and disc 10 would inevitably become large and size reduction, particularly height reduction, would therefore be impossible to achieve.

One prior attempt to achieve height reduction is shown in Fig. 8 in which a total-reflection prism 19 is provided in the path of a beam from laser 3 to objective 6. However, this increases the total aberration of the optical system and requires a provision that allows prism 19 to be adjusted in position to correct errors which might occur during assemblage and further requires the laser 3 to be adjusted in position for aligment purposes. Thus, the use of a prism is undesirable from the manufacturing standpoint.

A further disadvantage of conventional pickups resides in the fact that since objective lenses are designed for use with collimated rays of light, objective lens system 1, Fig. 9, is only allowed to move in a range corresponding to the difference in diameter between it and collimating lens system 4. An increase in the diameter of collimating lens system 4 in an attempt to extend the movable range of lens 1 would result in a greater focal length and a larger numerical aperture.

According to the present invention there is provided an optical pickup device for transducing encoded optical information from an optical track of a disc, comprising:

lens means mounted so as in use to be opposite said track; a semiconductor laser for emitting, in use, a beam which initially diverges and is directed onto said track by said lens means; drive means arranged to move said lens means in directions parallel and perpendicular to a surface of said disc, so that said beam can be focused onto said optical track; characterised in that:—

said lens means is movable in a diverging part of the beam emitted from said semiconductor laser, and one side of said lens means, facing said disc, has a greater numerical aperture than the other side, facing said semiconductor laser, such that the ratio of the two numerical aperture values is in the range of from 3 to 5.

The lens means may preferably comprise a single objective lens which moves in the divergent beam from the semiconductor laser, or may be an objective lens and a collimating lens fixedly connected together and which move together in the divergent beam.

The present invention can reduce the problems encountered with conventional pickups by mounting an objective lens system or a lens holder holding it in a one-piece unit in the path of diverging rays light from a semiconductor laser.

In one embodiment the aberration of the lens system is reduced by placing the objective lens in a diverging beam of a semiconductor laser without using a collimating lens.

In another embodiment an objective lens system and a collimating lens system are integral as a one-piece unit in the lens holder of an objective drive unit and this one-piece unit is in the path of a diverging beam of semiconductor laser to thereby shorten the distance between the two lenses. Reduction in cost and in the number of parts required are achieved.

In the latter embodiment the collimating lens acts as a balance weight for the objective lens.

In order that the invention may be more clearly understood the following description is given by way of example only with reference to the accompanying drawings in which:—

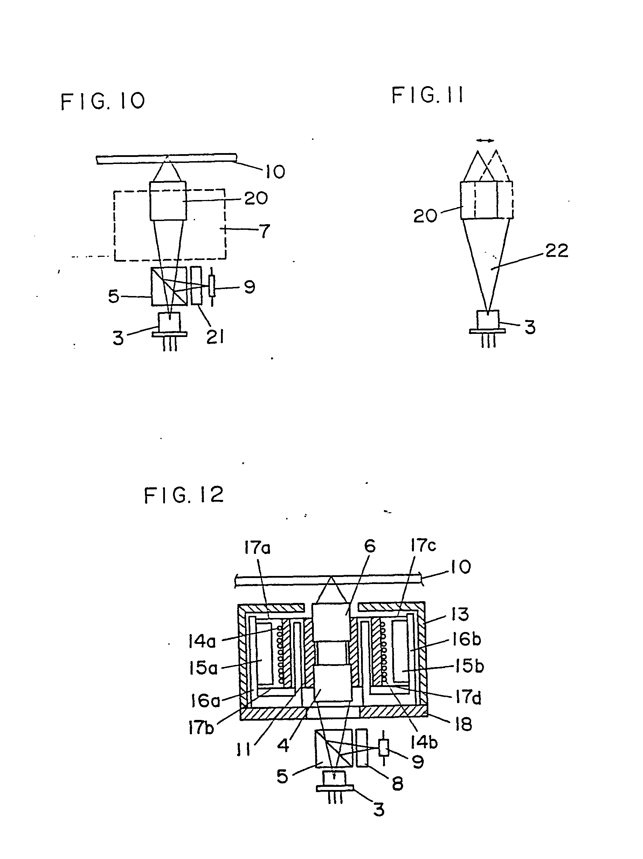

Figs. 1 to 3 are illustrations useful for describing the operational principle of optical pickups; Figs. 4 and 5 are illustrations of conventional optical pickups; Fig. 6 is sectional view of an objective drive unit of the conventional optical pickups; Fig. 7 is a drawing illustrating the relationship between a semiconductor laser and a collimating lens; Fig. 8 is an illustration another conventional optical pickup; Fig. 9 is an illustration for describing the problem associated with the conventional optical pickups; Fig. 10 is a view showing an optical pickup according to an embodiment of the present invention; Fig. 11 is an illustration useful for describing the operation of the optical pickup according to this invention; and Fig. 12 is a sectional view of an optical pickup according to another embodiment of the present invention.

Fig. 10 shows the structure of an optical pickup according to an embodiment of the present invention. In the drawings, numeral 20 designates an objective lens movably mounted in opposed relation to the surface of a disc; numeral 7 depicts an objective drive unit; 5 designates a semitransparent mirror for bending light reflected from the disc 10 to a light-receiving element 9; numeral 21 illustrates an error detecting optical system for detecting focus error and tracking error; and numerical 3 depicts a semiconductor laser which is equal in structure to the conventional one.

The operation of the optical pickup according to the present invention is as follows.

A diverging beam emitted from the semiconductor laser 3 passes through the semitransparent mirror 5 to the objective 20 where it is focused to produce a microscopic light spot on the disc 10. Light reflected from the disc 10 is made to be incident on the light-receiving element 9 by the semitransparent mirror 5 and optical detecting system 21.

In this case, since the beam spot is maintained in the focal plane by a servo-control mechanism, the reflected light returns to the incident optical path, irrespective of the position of objective 20, and forms a spot in a position conjugate with the position of semiconductor laser 3 with respect to the semitransparent mirror 5 to obtain normal signals.

The ratio of numerical aperture of the objective lens system on the semiconductor laser side to the numerical aperture on the disc side, i.e., the magnification of the system is varied somewhat when the objective 20 is moved in a direction of focus. If this ratio is too small, such variation would be substantial and therefore aberration occurs. On the other hand, if it is too large, the optical path between semiconductor 3 and disc 10 becomes longer, resulting in a bulky optical pickup. For an objective lens system having a movable range of ±1 mm (actual numerical values), the desirable ratio of numerical apertures is 3 to 5 (semiconductor laser side < disc side).

Since the objective moves in a diverging beam as shown in Fig. 11, it is possible to increase its movable range as compared with that of conventional devices.

Since a collimating lens is not used, the optical pickup of the invention is low cost, reduces aberration, allows a greater movable range for objective lens 20, and is compact in design, particularly low in profile.

In this embodiment, the semitransparent mirror 5 is provided between semiconductor laser 3 and objective 20, however, in place of the mirror, a combination of a polarization beam splitter and a quarter wavelength plate can be employed. Furthermore, in cases where a three-beam method is adopted for tracking control, a diffraction grating can be additionally used. In any of this modifications, since the distance between semiconductor laser and objective lens and hence the total length of the device remains unchanged.

Fig. 12 shows an optical pickup according to another embodiment of the present invention, wherein an objective and a collimating lens are integrally mounted in the diverging beam of a semiconductor laser.

In Fig. 2, numeral 6 designates an objective movably placed in opposed relation to a disc 10, numeral 11 depicting a lens holder for holding the objective, numeral 4 illustrating a collimating lens fixedly secured on the lens holder. The description of the other parts which correspond to those of Fig. 6 are omitted for simplicity.

The operation of the optical pickup comprising the above-mentioned parts is as follows.

Light emitted from the semiconductor laser 3 is collimated by the collimating lens system 4 secured on the lens holder 11 after passing through semitransparent mirror 5 and then focussed on the disc 10 by the objective 6. The reflected light from the disc 10 passes through the objective 6 and collimating lens 4. The beam is bent by the semitransparent mirror 5 to form a spot on the light-receiving element 9 by means of the detecting optical system 8.

Since the objective 6 and collimating lens 4 are fixedly secured on the lens holder 11, it is possible to shorten the distance between collimating lens 4 and objective 6, resulting in a compact, low-profile optical pickup as in the previous embodiment. Therefore, optical pickups for use in, for example, digital audio disc players to be mounted on cars can be realized witmout bending the light between semiconductor laser 3 and objective 6, permitting an increase in efficiency in assemblage.

Furthermore, in this embodiment, since the collimating lens 4 is positioned at the lower portion of lens holder 11, the center of gravity of the lens holder 11 is adjusted with respect to holding members and drive members, without a balance weight required in conventional optical pickups, resulting in reduced parts.

Application for industries

Since an optical pickup according to the present invention, as described above, is arranged such that an objective, or a combination of objective and collimating lens systems, moves in diverging beam of a semiconductor laser, it is possible to increase the movable range of objective and to reduce the uuze and profile of the optical pickup.

List of reference numerals

1 — objective
2 — optical pickup
3 — semiconductor laser
4 — collimating lens system
5 — semitransparent mirror
6 — objective
7 — objective drive unit
8 — error detecting optical system
9 — light-receiving element
10 — disc
11 — lens holder
12 — balance weight
13 — cover
14a, 14b — coil
15a, 15b — magnet
16a, 16b — yoke
17a, 17b, 17c, 17d — supporting member
18 — base
19 — total reflection prism
20 — objective
21 — error detecting optical system
22 — divergent pencil of rays

Claims

1. An optical pickup device for transducing encoded optical information from an optical track of a disc (10), comprising:

lens means (20) mounted so as in use to be opposite said track; a semiconductor laser (3) for emitting, in use, a beam (22) which initially diverges and is directed onto said track by said lens means (20); drive means (7) arranged to move said lens means (20) in directions parallel and perpendicular to a surface of said disc, so that said beam (22) can be focused onto said optical track; characterised in that:—

said lens means (20) is movable in a diverging part of the beam (22) emitted from said semiconductor laser (3), and one side of said lens means (20) facing said disc (10), has a greater numerical aperture than the other side, facing said semiconductor laser (3), such that the ratio of the two numerical aperture values is in the range from 3 to 5.

2. An optical pickup device according to claim 1 wherein said lens means (20) comprises an objective lens (6), and a collimating lens (4) both fixedly secured in a holding member (11).

3. An optical pickup device according to claim 2 wherein the centre of gravity of said holding member (11) is arranged to be substantially in the centre of said device means (7).

4. An optical pickup device according to claim 1 wherein said lens means comprises an objective lens (6) and a counter weight fixedly mounted in a holder.

Patentansprüche

1. Optisches Aufnahmegerät zum Wandeln kodierter optischer Information von einer optischer Spur einer Platte (10) mit:

Linsenmittel (20), das so angebracht ist, daß es sich im Gebrauch gegenüber der Spur befindet; einem Halbleiterlaser (3), um im Gebrauch einen Strahl (22) zu emittieren, der anfangs divergiert und durch das Linsenmittel (20) auf die Spur gerichtet wird; zur Bewegung des Linsenmittels (20) in zu einer Oberfläche der Platte parallelen und senkrechten Richtungen angeordnetem Antriebsmittel (7), so daß der Strahl (22) auf die optische Spur fokussiert werden kann; dadurch gekennzeichnet, daß:

das Linsenmittel (20) in einem divergierenden Teil des von dem Halbleiterlaser (3) emittierten Strahls (22) bewegbar ist und daß eine der Platte (10) zugewendete Seite des Linsenmitttels (20) eine größere numerische Apertur besitzt als die andere, dem Halbleiterlaser (3) zugewendete Seite, so daß das Verhältnis der beiden numerischen Aperturwerte im Bereich von 3 bis 5 liegt.

2. Optisches Aufnahmegerät nach Anspruch 1, bei dem das Linsenmittel (20) eine Objektivlinse (6) und eine Kollimatorlinse (4) umfaßt, die beide fest in einem Halteglied (11) gesichert sind.

3. Optisches Aufnahmegerät nach Anspruch 2, bei dem der Schwerpunkt des Halteglieds (11) im wesentlichen im Zentrum des Gerätemittels (7) angeordnet ist.

4. Optisches Aufnahmegerät nach Anspruch 1, bei dem das Linsenmittel eine Objektivlinse (6) und ein fest in einem Halter angebrachtes Gegengewicht umfaßt.

**Revendications**

1. Dispositif de lecture optique pour restituer des informations optiques codées à partir d'une piste optique d'un disque (10), comprenant:

un agencement d'objectif (20) monté de manière à se trouver, pendant l'utilisation, en face de ladite piste; un laser (3) à semi-conducteur pour émettre, pendant l'utilisation, un faisceau (22) qui diverge initialement et qui est dirigé sur ladite piste par l'agencement d'objectif (20); un moyen d'entraînement ou de réglage (7) agencé de manière à déplacer l'agencement de lentille (20) dans des directions parallèle et perpendiculaire à une surface du disque, de telle sorte que le faisceau (22) puisse être focalisé sur la piste optique, caractérisé en ce que:

ledit agencement d'objectif (20) peut être déplacé dans une partie divergente du faisceau (22) émis par le laser (3) à semi-conducteur, et un des côtés de l'agencement d'objectif (20) orienté vers le disque (10) présente une valeur d'ouverture supérieure à celle de l'autre côté orienté vers le laser (3) à semi-conducteur, de manière telle que le rapport des deux valeurs d'ouverture se situe dans la plage allant de 3 à 5.

2. Dispositif de lecture optique selon la revendication 1, dans lequel l'agencement d'objectif (20) comprend un objectif (6) et une lentille de collimation (4) assujettis de façon fixe l'un et l'autre dans un élément de support (11).

3. Dispositif de lecture optique selon la revendication 2, dans lequel le centre de gravité de l'élément de support (11) est déterminé de manière à se trouver sensiblement au centre du dispositif d'entraînement (7).

4. Dispositif de lecture optique selon la revendication 1, dans lequel l'agencement d'objectif comprend un objectif (6) et un contrepoids monté fixement dans un support.

FIG. 1

FIG. 2

FIG. 3

FIG. 4

FIG. 5

FIG. 6

FIG. 7

4

3

FIG. 8

9

8

10

6

7

3 4 5 19

FIG. 9

1

4

3

2

FIG. 10

FIG. 11

FIG. 12